# EUROPEAN PATENT APPLICATION

(11) **EP 4 228 247 A1**
(43) Date of publication of application: **16.08.2023**
(21) Application number: 22156499.0
(22) Date of filing: 14.02.2022
(51) Int. Cl.: H04N 5/232

(54) **CAMERA SYSTEM FOR MOTOR VEHICLE AND METHOD TO OPERATE**

(71) Applicant: Arriver Software AB, 583 30 Linköping (SE)
(72) Inventor: Roll, Jacob, 585 97 Linköping (SE); Lindgren, Leif, 58336 Linköping (SE)
(74) Representative: Loveless, Ian Mark

(57) **Abstract**

The invention relates to a camera system (10) for a motor vehicle, wherein the camera system (10) comprises a camera (11), which is adapted to capture images, and a data processing device (12), wherein the camera (11) is adapted to capture first images (20) with a first exposure time (21) and second images (22) with a second exposure time (23) in an alternating manner or interleaved manner. The data processing device (12) is adapted to generate a first image output (13) and second image output (14) different from each other. The first image output (13) comprises the first images (20) with the first exposure time (21), and the data processing device (12) is adapted to combine the first images (20) and the second images (22) to third images (24), and to generate the second image output (14) comprising third images (24). Each of the third images (24) has partially or entirely a third exposure time (25) with respect to the area of said third images, which third exposure time (25) is the sum of the first exposure time (20) and the second exposure time (22). The invention further relates to a corresponding method to operate a corresponding camera system (10) .

## Description

The invention relates to a camera system for a motor vehicle, wherein the camera system comprises a camera, which is adapted to capture images with a frame rate, and a data processing device. Further on, the invention relates to a corresponding method to operate the camera system.

Camera systems are often used in motor vehicles and are typically mounted on the inside of the windshield. The captured images respectively video from the camera can be used for computer vision algorithms to perform ADAS functions (Advanced Driver Assistance System) like detecting objects and emergency braking of the vehicle. The images or videos can also be used for human vision applications like dashcam recording and displaying the images to the driver, for example, with augmented reality applications.

In many of todays vehicles two cameras looking in the same direction in the vehicle are used for these two types of applications, wherein one camera is dedicated for ADAS computer vision functions, and another camera is for human vision applications.

A problem with using only one camera to feed both types of applications is the fact that computer vision and human vision work best with different types of images. This is especially true in low light conditions, i.e. at night. Human vision applications demand a very long exposure time in dark conditions in order to appear suitable to the human perception. The long exposure time leads to a higher signal to noise ratio (SNR). The long exposure time comes with a lot of motion blur when the ego vehicle or other traffic participants are moving, but this does not to a great extent negatively affect the perception in human vision applications. The motion blur is not detectable by a human to a sufficient degree. In contrast, computer vision applications often work better with more moderate or shorter exposure times with reduced motion blur, so that a different trade-off between the signal to noise ratio and motion blur leads to better results.

For example, US 8,872,918 B2 discloses a method to operate a single camera system with a single camera, wherein the camera captures images suitable for human vision and for computer vision. Therefore, images are recorded with short and long exposure times in an alternating manner.

It is the object of the invention to provide a further improved camera system with a camera and an improved method to operate such a camera system, which is suitable for human vision and computer vision.

The invention solves this problem with the features of the independent claims. A camera system for a motor vehicle is proposed, wherein the camera system comprises a camera, which is adapted to capture images with a frame rate, and a data processing device. The camera is adapted to capture first images with a first exposure time and second images with a second exposure time in an alternating manner or interleaved manner. It is proposed that the data processing device is adapted to generate a first image output and second image output different from each other, wherein the first image output comprises the first images with the first exposure time, and wherein the data processing device is adapted to combine the first images with the first exposure time and the second images with the second exposure time to third images, and to generate the second image output comprising third images. Each of the third images has partially or entirely a third exposure time with respect to the area of said third images, which third exposure time is the sum of the first exposure time and the second exposure time.

Accordingly, this allows for good looking images for human vision applications in the second image output due to the long exposure time of said third exposure time, while high frame rates of the camera are possible at the same time. Thus, the camera of the camera system can be operated with higher or increased frame rates, in particular in dark conditions, leading to a higher resolution in time. A higher frame rate is beneficial for human vision and computer vision. Preferably, the camera system is mounted in or on a motor vehicle.

For example, third images have entirely a third exposure time with respect to the area of the third images when the complete area of said image or frame, thus, preferably every pixel, has an exposure time which is the sum of the first exposure time and the second exposure time. Further on, third images have partially a third exposure time with respect to the area of said third images when only parts of the area of said image or frame have said third exposure time while the rest of the area of said third images has a different exposure time, for example. In this case, the pixels in the third images do not have all the same exposure time, but the third exposure time and the different exposure time. Said different exposure time is preferably the first exposure time.

Generally, the terms first images and second images do not refer to the chronological order of said images, so that it is also possible that a second image is captured before a first image in a given time frame or vice versa.

In a preferred embodiment, even images of the frame rate captured by the camera are the first images with the first exposure time and uneven images of the frame rate are second images with the second exposure time, but in another embodiment, it is possible that even images of the frame rate captured by the camera are the second images with the second exposure time and uneven images of the frame rate are first images with the first exposure time. The camera preferably comprises an image sensor.

Preferably, the first image output is transferred to a computer vision system. At night computer vision applications generally demand more moderate exposure time, i.e., shorter than for human vision applications. Motion blur is unwanted in most cases of computer vision applications, so that the exposure time is a trade-off between signal to noise ratio and motion blur. On the other hand, flicker is not a concern for most computer vision applications. Preferably, the first exposure time is between 7 ms to 15 ms. A computer vision system may comprise a separate data processing device or may be integrated in the data processing device of the camera system. Said computer vision system may perform computer vision algorithms, like object detection, and ADAS functions, like emergency braking.

Preferably, in order to limit the needed bandwidth for computer vision, only the first image output is received by and/or sent to a computer vision systems, in particular a computer vision system on a chip (CV SoC).

Moreover, it is preferred that the second image output is transferred to a human vision system displaying the second image output. In dark conditions or at night time very long exposure times are wanted for human vision applications. Very long exposure times come with a lot of motion blur when the ego vehicle is moving. Nonetheless, motion blur is less of a concern for human vision applications as it is not detected by humans to a vast extent. A human vision system may comprise a display and/or a head-up display which are adapted to display the captured content. Further on, a human vision system may comprise video storage for later review, e.g. a dashcam, and/or a human machine interface (HMI) in general.

In a preferred embodiment, the second exposure time is longer than the first exposure time. In an alternative embodiment, the first exposure time and the second exposure time are equal.

It is further proposed that the camera is adapted to capture the second images with the second exposure time with a lower number of image rows than the first images with the first exposure time.

Capturing a lower number of image rows every other frame can be achieved on the same imaging sensor, for example, when a lower number of rows is read out. Reducing the number of rows of the second images allows to run the camera with an increased frame rate, while the first images and also the first image output comprise the full resolution or at least higher resolution. Accordingly, only the second image output is compromised by any limitation of the camera.

In a further development, it is proposed that the second images with the second exposure time have a smaller field of view than the first images with the first exposure time.

The smaller field of view of the second images allows to run the camera with an increased frame rate. A full or at least higher resolution can still be provided by the first images or the first image output. In general, a smaller field of view may result in a lower row or column count at least in one dimension. Preferably, the smaller field of view of the second images have a lower vertical field of view. Further preferably, the second images have a smaller field of view which is reduced with respect to the top and/or the bottom of the image. In preferred embodiments, the smaller field view of the second images is in a single, preferably coherent, block. A block is a plurality of consecutive images rows in an image, which are preferably the consecutive rows of an image sensor present in a camera.

It is further proposed that the smaller field of view of the second images compared to the first images are optimized for the second image output, wherein the image rows and/or the field of view of the second images are optimized for a reduction of the blanking time between the end of the capturing first images and capturing second images. This is advantageously to avoid rolling shutter effects.

Further on, it is proposed that the third images have a smaller field of view than the first images. In an advantageous embodiment, the second images have the same field of view as the third images and preferably also the same as the second image output. Thus, the second image output has preferably a smaller field of view than the first image output. In this case the second output stream can be easily generated from the third images, wherein the third images have entirely a third exposure time.

In another development, it is proposed that the third images have the same field of view as the first images with the first exposure time, wherein the third images have partially image rows with the third exposure time and partially image rows with the first exposure time.

The field of view of the second image output can be maximized in this case, thereby maintaining a high frame rate of the camera and a long exposure time in the third images at least partially. In other words, the image rows having the third exposure time, which number may be constrained, e.g., by a target frame rate, are extended with the image rows available with the first exposure time. Thus, in this preferred embodiment the second image output comprises third images which third images comprise image rows having the third exposure time and image rows having the first exposure time. Advantageously, the image rows having the first exposure are in the upper part and/or lower part of the image. These parts may represent the sky and/or the area directly in front of the ego vehicle, for example. In these parts, the shorter exposure time may be perceived less by humans.

In general, image rows can also be referred as image columns depending on the read-out direction of the image sensor or the camera.

It is further proposed that the data processing device is adapted to perform a blending in third images between image rows with the third exposure time and image rows with the first exposure time.

The blending allows for a smooth transition from the region having image rows with a third exposure time to the region having image rows with a first exposure time. Thus, the difference between these regions is less prone to detection by humans in a human vision application.

It is further proposed that the first images with the first exposure time and the second images with the second exposure time are each captured with half the frame rate of the camera, and that the camera is adapted to capture first images with a first exposure time and second images with a second exposure time in an alternating manner.

Thus, the frames respectively images captured by the camera with the first exposure time and the second exposure time have the same rate of frames per second, while first images and second images are captured in alternating succession. As a result, it is possible to capture two high resolution images, namely the first and second images, with one camera, each having half the frame rate of the camera.

According to a further development, it is proposed that rows of the first images with the first exposure time and rows of the second images with the second exposure time are each captured alternately, wherein the camera is adapted to capture first images with a first exposure time and second images with a second exposure time in an interleaved manner.

In this case, the camera or the camera's image sensor preferably reads a row of the second image with the second exposure time after a row the first image with the first exposure time has been read, or vice versa. This type of read-out pattern is beneficial to the generation of the parts of the third images having a third exposure time, wherein the alignment of rows having the first and second exposure time is improved. It also allows for an increased frame rate of the camera respectively the camera's image sensor, in particular by using fewer read-outs.

Preferably, first images with a first exposure time and/or second images with a second exposure time are each a composition of multiple sub exposure times and/or each a composition of multiple read-outs from the pixels of the first images and/or second images at the end of exposure time. Further preferably, the camera comprises a high dynamic range (HDR) image sensor.

Image sensors for cameras are known which are enabled to handle high dynamic range (HDR) within a scene. In a first type of high dynamic range sensors, a long exposure time captures low light parts of the scene, while the shortest exposure time captures high light parts of the scene. Said HDR image sensors then merges the information from separate exposures or sub exposure times. In a second type of high dynamic range sensors, the high dynamic range is obtained by using a single exposure time but with several different read-outs from a pixel of the image sensor at the end of the exposure time. Such different read-outs may be a read-out with a very high gain to minimize read-out noise or a read-out with a low gain to capture higher signals or a read-out where the pixel use an internal overflow capacitor for very strong levels of light or a read-out, wherein one or more reset values are read to eliminate fixed pattern noise, which read-outs the image sensor then merges. Both types of high dynamic range sensors can be used to capture first images with a first exposure time and second images with a second exposure time in an alternating manner or interleaved manner as proposed.

In an advantageous embodiment, it is also possible to have different HDR settings for the first images and the second images. For example, this can be used when capturing the first image and the second image in an interleaved manner in order to reach a higher frame rate. For example, the first images having the first exposure time can be a HDR image using two sub exposure times and the second images having the second exposure time can be an image using no sub-exposure times.

According to a further development, it is proposed that the data processing device is adapted to adjust the third exposure time to reduce flicker and flicker banding.

The third exposure as the sum of the first and second exposure time can be optimized to reduce flicker and flicker banding from light sources in the captured images. The first and the second exposure time may therefore be adjusted in order to achieve an optimal performance.

For example, in a country with a 60 Hz power supply the first exposure time can be 10 ms exposure time, which can be beneficial for computer vision applications or algorithms using the first image output. The second exposure can be then set to 15 ms, for example. The third exposure time in the third images are provided by the camera system as the second image output, which third exposure time is then 10 ms + 15 ms = 25 ms in this example. Said third exposure time of 25 ms reduces flicker and flicker banding from 120 Hz light sources in the 60 Hz power supply environment or country. In a further example, the first exposure time can be set to 16.5 ms for computer vision and the second exposure time can be set to 16.5 ms as well, so that the third exposure time is then 16.5 ms + 16.5 ms = 33 ms in order to avoid flicker in a country with 60 Hz power supply, in particular with an image sensor of the camera capable of 60 frame per second.

In another example, in a country with a 50 Hz power supply the first exposure time can be again 10 ms exposure time, so that a first image output is suitable for computer vision applications. The second exposure may be then adjusted to be 10 ms. The resulting third exposure time of 20 ms, which is present in parts of the third images or entirely in the third images, reduces flicker and flicker banding from light sources in the 50 Hz power supply environment or country. In a further example, the first exposure time can be set to 13.5 ms for computer vision and the second exposure time can be set to 16.5 ms, so that the third exposure time is then 13.5 ms + 16.5 ms = 30 ms in order to avoid flicker in a country with 50 Hz power supply, in particular with an image sensor of the camera capable of 60 frame per second.

Accordingly, the first image output delivers minimized motion blur for computer vision applications, and the second image output delivers a high signal to noise ratio and is flicker free for human vision application, while still a high frame rate is possible using just one camera and in particular one image sensor.

In general, the camera system may have multiple cameras. Nonetheless, these multiple cameras are preferably directed in different directions or have a different focal length, while the advantageous effect of said first image output and second image output from a single camera with a high frame rate is possible for each camera. In preferred embodiments, the camera system comprises at least two cameras, which preferably form a stereo vision system. For example, the camera system may provide the proposed first image output and second image output from one or both cameras of the stereo vision system.

Further on, it is proposed that the first exposure time and second exposure time are set dependent on position data provided to the camera system in order to reduce flicker and/or flicker banding of the third exposure time. Thus, flicker or flicker banding in the third images with the third exposure time can be avoided, so that in the combined second image output flicker is not present. Any flicker or flicker banding in the first images and the second images may be present, but does not affect the quality of the first image output and second image output. In general, the first image output may show flicker or flicker banding, but this is not a concern for most computer vision applications.

In a preferred embodiment, the camera system is coupled to a satellite navigation system which provides the position data to the camera system to set the exposure times, so that flicker effects depending on the local stationary power supply can be avoided in the second image output with the third exposure time.

Further on, to solve the problem of the invention, a method to operate a camera system according claims 1 to 13 is proposed, wherein the camera captures first images with a first exposure time and second images with a second exposure time in an alternating manner or interleaved manner. The data processing device generates a first image output and second image output different from each other, wherein the first image output comprises the first images with the first exposure time, and wherein the data processing device combines the first images with the first exposure time and the second images with the second exposure time to third images, and generates the second image output comprising third images, wherein each of the third images has partially or entirely a third exposure time with respect to the area of said third images, which third exposure time is the sum of the first exposure time and the second exposure time.

In the following the invention shall be illustrated on the basis of preferred embodiments with reference to the accompanying drawings, therein shows:
- Fig. 1: a schematic illustration of a camera system;
- Fig. 2: a schematic illustration of the camera read out and an example of the combination of the first and second images with exemplary exposure times; and
- Fig. 3: another example of the combination of the first and second images.

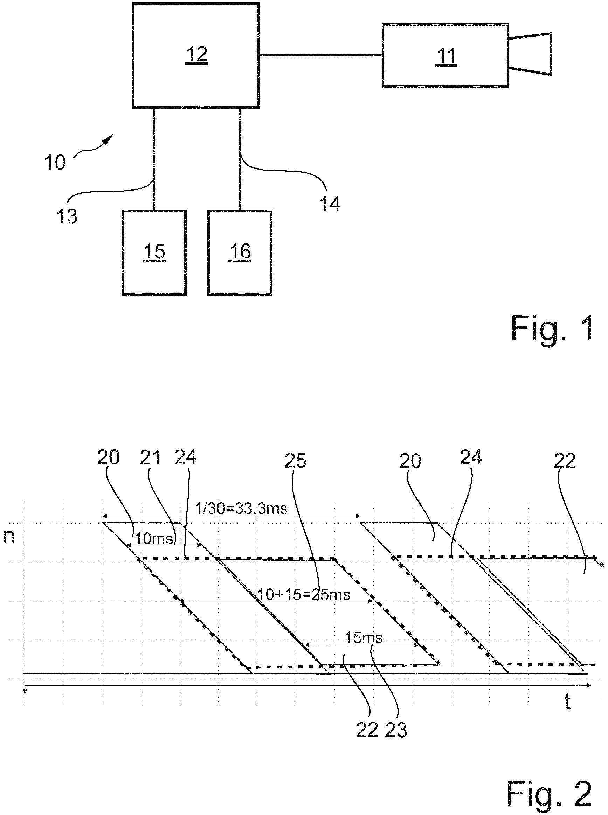

Figure 1 schematically shows a preferred embodiment of the proposed camera system 10. The camera system 10 comprises a camera 11 and a data processing device 12, which data processing device 12 is preferably a system on a chip (SoC) processing the images or data captured by the camera 11. In a preferred embodiment, the camera system 10 and the camera 11 are mounted on the inside of the windshield in a motor vehicle, wherein the camera 11 is advantageously looking forward in the driving direction as a front camera 11.

The camera 11 is adapted to capture first images 20 with a first exposure time 21 and second images 22 with a second exposure time 23 in an alternating manner. For example even images captured by the camera 11 are the first images 20 with the first exposure time 21 and uneven images are second images 22 with the second exposure time 23.

The camera 11 preferably runs at a frame rate of 60 Hz, for example, wherein the first images 20 and the second images 22 are each captured with 30 Hz or 30 frames per second. Accordingly, the first images 20 and the second images 22 are captured with half the frame rate of the camera 11.

The captured images 20, 22 are transferred to the data processing device 12, which combines the first images 20 with the first exposure time 21 and the second images 22 with the second exposure time 23 to third images 24 or to parts of third images 24. The combined parts of the third images 24 have a third exposure time 25. The camera system 10 adds the first exposure time 21 to the second exposure time 22 in order to obtain the third exposure time 25 for each row, when both exposure times are available for said row. Third images 24 are thereby generated, which have partially or entirely said third exposure time 25 and are transferred as a second image output 14 to a human vision system 16.

The data processing device 12 transfers the first images 20 as the first image output 13 to a computer vision system 15 or computer vision processor. Thus, two different image outputs 13, 14 are generated from one camera 11, wherein the second image output 14 is suitable for human vision systems 16 at night, which demand a long exposure time, wherein at the same time a high frame rate in the first and the second image output 13, 14 are possible.

In a preferred embodiment, the first images 20 and the second images 22 have the same number of rows and accordingly the same field of view. In this advantageous case the combined third images 24 can have entirely the third exposure time 25 with the full resolution of the camera 11.

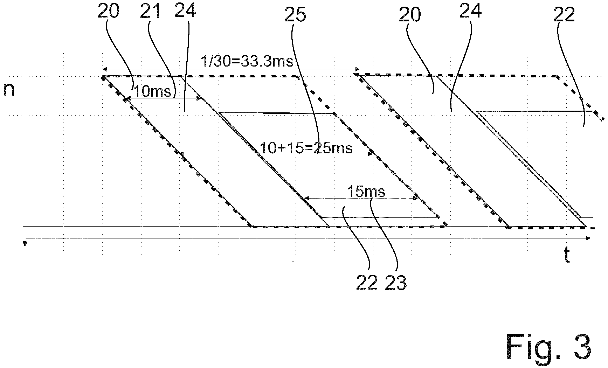

Figures 2 and 3 illustrate the captures images in a diagram with the rows n of the camera 11 respectively the sensor of the camera 11 over time t. Typically, sensors for cameras 11 are limited with respect to their frame rate for a given resolution. Thus, higher frame rates, for example, 60 frames per second (fps), are often only supported if less rows are read out. For example, an 8-megapixel high resolution may not be supported at the 60 fps. Such limitation is present in the embodiment of Figures 2 and 3. The first and second images 20, 22 are preferably captured in direct succession, while a pause may occur after a second image 22 is captured before a first image 20 is captured again.

In Figure 2 the first image 20 is read out with the first exposure time 21 for each row. The first exposure time 21 in this embodiment is 10 ms. The rows n are read with the full resolution of the camera 11, for example, row 1 to row 1920. As a result, the first images 20 are captured with the complete field of view, which can be provided as the first image output 13 to a computer vision system 15. The first image output 13 has a relative short exposure time of 10 ms, especially for dark conditions, and is thus suitable for computer vision, while flicker and flicker banding are irrelevant for computer vision.

The second images 22 are captured with a second exposure time 23 of 15 ms and are read out from row 500 to 1820 in this embodiment, i.e., skipping parts at the top and at the bottom of the second image 22. The third image 24 has the same number of rows or field of view as the second image 22 and is generated entirely with rows having the third exposure time 25 as the sum of the first and second exposure time 21, 23. As a result, the second image output 14 has a reduced vertical field of view compared to the first image output 13. The first and second image output 13, 14 can be provided from the data processing device 12 at a frame rate of 30 fps, each.

Said third exposure time 25 can be used in 60 Hz countries to give a high signal to noise ratio and to remove flicker from 120 Hz light sources. In an advantageous embodiment, the data processing device 12 sets the second exposure time 23 to 20 ms in case the camera system 10 is operated in a 50 Hz country in order to reduce flicker from 100 Hz light sources in the second image output 14.

In Figure 3, the third image 24 is generated with the full resolution, e.g., 1920 rows, wherein the second image 22 is again only available from rows 500 to 1820. In this embodiment the data processing device 12 generates the third images 24 with the third exposure time 25 for rows 500 to 1820 while rows 1 to 499 and 1821 to 1920 of the third image 24 have the first exposure time 21. This way the full resolution can be provided via the second image output 14 to a human vision system 16. In preferred embodiments, the transition between the rows with the first exposure time and the second exposure time can be smoothed by a blending function of the data processing device 12.

## Claims

1. Camera system (10) for a motor vehicle, wherein the camera system (10) comprises a camera (11), which is adapted to capture images with a frame rate, and a data processing device (12), wherein
- the camera (11) is adapted to capture first images (20) with a first exposure time (21) and second images (22) with a second exposure time (23) in an alternating manner or interleaved manner, wherein
- the data processing device (12) is adapted to generate a first image output (13) and second image output (14) different from each other, **characterized in that**
- the first image output (13) comprises the first images (20) with the first exposure time (21), and wherein
- the data processing device (12) is adapted to combine the first images (20) with the first exposure time (21) and the second images (22) with the second exposure time (23) to third images (24), and to generate the second image output (14) comprising third images (24), wherein
- each of the third images (24) has partially or entirely a third exposure time (25) with respect to the area of said third images (24), which third exposure time (25) is the sum of the first exposure time (20) and the second exposure time (22).

2. Camera system (10) according to claim 1, wherein
- the camera (11) is adapted to capture the second images (22) with the second exposure time (23) with a lower number of image rows than the first images (20) with the first exposure time (21).

3. Camera system (10) according to claim 1 or 2, wherein
- the second images (22) with the second exposure time (23) have a smaller field of view than the first images (20) with the first exposure time (21).

4. Camera system (10) according to any one of the preceding claims, wherein
- the third images (24) have a smaller field of view than the first images (20).

5. Camera system (10) according to any one of claims 1 to 3, wherein
- the third images (24) have the same field of view as the first images (20) with the first exposure time (21), wherein the third images (24) have partially image rows with the third exposure time (25) and partially image rows with the first exposure time (21).

6. Camera system (10) according to claim 5, wherein
- the data processing device (11) is adapted to perform a blending in third images (24) between image rows with the third exposure time (25) and image rows with the first exposure time (21).

7. Camera system (10) according to any one of the preceding claims, wherein
- the first images (20) with the first exposure time (21) and the second images (22) with the second exposure time (23) are each captured with half the frame rate of the camera (11), which camera (11) is adapted to capture first images (20) with a first exposure time (21) and second images (22) with a second exposure time (23) in an alternating manner.

8. Camera system (10) according to any one of claims 1 to 6, wherein
- rows of the first images (20) with the first exposure time (21) and rows of the second images (22) with the second exposure time (23) are each captured alternately, wherein the camera (11) is adapted to capture first images (20) with a first exposure time (21) and second images (22) with a second exposure time (23) in an interleaved manner.

9. Camera system (10) according to any one of the preceding claims, wherein
- first images (20) with a first exposure time (21) and/or second images (22) with a second exposure time (23) are each a composition of multiple sub exposure times and/or each a composition of multiple read-outs from the pixels of the first images (20) and/or second images (22) at the end of exposure time.

10. Camera system (10) according to any one of the preceding claims, wherein
- the data processing device (11) is adapted to adjust the third exposure time (25) to reduce flicker and flicker banding.

11. Camera system (10) according to any one of the preceding claims, wherein the first exposure time (21) and second exposure time (23) are set dependent on position data provided to the camera system (10) in order to reduce flicker and/or flicker banding of the third exposure time (25) .

12. Camera system (10) according any one of the preceding claims, wherein
- the first image output (13) is transferred to a computer vision system (15).

13. Camera system (10) according any one of the preceding claims, wherein
- the second image output (14) is transferred to a human vision system (16) displaying the second image output (14) .

14. Method to operate a camera system (10) according to any one of the preceding claims, wherein
- the camera (11) captures first images (20) with a first exposure time (21) and second images (22) with a second exposure time (23) in an alternating manner or interleaved manner, wherein
- the data processing device (12) generates a first image output (13) and second image output (14) different from each other, wherein
- the first image output (13) comprises the first images (20) with the first exposure time (21), and wherein
- the data processing device (12) combines the first images (20) with the first exposure time (21) and the second images (22) with the second exposure time (23) to third images (24), and generates the second image output (14) comprising third images (24), wherein
- each of the third images (24) has partially or entirely a third exposure time (25) with respect to the area of said third images (24), which third exposure time (25) is the sum of the first exposure time (21) and the second exposure time (22).

## Amended claims

### Amended claims in accordance with Rule 137(2) EPC.

1. Camera system (10) for a motor vehicle, wherein the camera system (10) comprises a camera (11), which is adapted to capture images with a frame rate, and a data processing device (12), wherein
- the camera (11) is adapted to capture first images (20) with a first exposure time (21) and second images (22) with a second exposure time (23) in an alternating manner or interleaved manner, wherein
- the data processing device (12) is adapted to generate a first image output (13) and second image output (14) different from each other, **characterized in that**
- the first image output (13) comprises the first images (20) with the first exposure time (21), and wherein
- the data processing device (12) is adapted to combine the first images (20) with the first exposure time (21) and the second images (22) with the second exposure time (23) to third images (24), and to generate the second image output (14) comprising third images (24), wherein
- each of the third images (24) has entirely a third exposure time (25) with respect to the area of said third images (24) when the complete area of said third images (24) have said third exposure time (25), which third exposure time (25) is the sum of the first exposure time (20) and the second exposure time (22), or the third images (24) have partially a third exposure time (25) with respect to the area of said third images (24) when only parts of the area of said third images (24) have said third exposure time (25) while the rest of the area of said third images (24) have a different exposure time.

2. Camera system (10) according to claim 1, wherein
- the camera (11) is adapted to capture the second images (22) with the second exposure time (23) with a lower number of image rows than the first images (20) with the first exposure time (21).

3. Camera system (10) according to claim 1 or 2, wherein
- the second images (22) with the second exposure time (23) have a smaller field of view than the first images (20) with the first exposure time (21).

4. Camera system (10) according to any one of the preceding claims, wherein
- the third images (24) have a smaller field of view than the first images (20).

5. Camera system (10) according to any one of claims 1 to 3, wherein
- the third images (24) have the same field of view as the first images (20) with the first exposure time (21), wherein the third images (24) comprise image rows having the third exposure time (25) and image rows having the first exposure time (21)..

6. Camera system (10) according to claim 5, wherein
- the data processing device (11) is adapted to perform a blending in third images (24) between image rows with the third exposure time (25) and image rows with the first exposure time (21).

7. Camera system (10) according to any one of the preceding claims, wherein
- the first images (20) with the first exposure time (21) and the second images (22) with the second exposure time (23) are each captured with half the frame rate of the camera (11), which camera (11) is adapted to capture first images (20) with a first exposure time (21) and second images (22) with a second exposure time (23) in an alternating manner.

8. Camera system (10) according to any one of claims 1 to 6, wherein
- rows of the first images (20) with the first exposure time (21) and rows of the second images (22) with the second exposure time (23) are each captured alternately, wherein the camera (11) is adapted to capture first images (20) with a first exposure time (21) and second images (22) with a second exposure time (23) in an interleaved manner.

9. Camera system (10) according to any one of the preceding claims, wherein
- first images (20) with a first exposure time (21) and/or second images (22) with a second exposure time (23) are each a composition of multiple sub exposure times and/or each a composition of multiple read-outs from the pixels of the first images (20) and/or second images (22) at the end of exposure time.

10. Camera system (10) according to any one of the preceding claims, wherein
- the data processing device (11) is adapted to adjust the third exposure time (25) to reduce flicker and flicker banding.

11. Camera system (10) according to any one of the preceding claims, wherein the first exposure time (21) and second exposure time (23) are set dependent on position data provided to the camera system (10) in order to reduce flicker and/or flicker banding of the third exposure time (25).

12. Camera system (10) according any one of the preceding claims, wherein
- the first image output (13) is transferred to a computer vision system (15).

13. Camera system (10) according any one of the preceding claims, wherein
- the second image output (14) is transferred to a human vision system (16) displaying the second image output (14).

14. Method to operate a camera system (10) according to any one of the preceding claims, wherein
- the camera (11) captures first images (20) with a first exposure time (21) and second images (22) with a second exposure time (23) in an alternating manner or interleaved manner, wherein
- the data processing device (12) generates a first image output (13) and second image output (14) different from each other, wherein
- the first image output (13) comprises the first images (20) with the first exposure time (21), and wherein
- the data processing device (12) combines the first images (20) with the first exposure time (21) and the second images (22) with the second exposure time (23) to third images (24), and generates the second image output (14) comprising third images (24), wherein
- each of the third images (24) has entirely a third exposure time (25) with respect to the area of said third images (24) when the complete area of said third images (24) have said third exposure time (25), which third exposure time (25) is the sum of the first exposure time (21) and the second exposure time (22), or the third images (24) have partially a third exposure time (25) with respect to the area of said third images (24) when only parts of the area of said third images (24) have said third exposure time (25) while the rest of the area of said third images (24) has a different exposure time.
